# EUROPEAN PATENT APPLICATION

(11) **EP 3 242 221 A1**
(43) Date of publication of application: **08.11.2017**
(21) Application number: 15874815.2
(22) Date of filing: 06.07.2015
(51) Int. Cl.: G06F 17/30

(54) **INFORMATION SEARCHING METHOD AND APPARATUS**

(30) Priority: 30.12.2014 CN 201410843273
(71) Applicant: Baidu Online Network Technology (Beijing) Co., Ltd, Beijing 100085 (CN)
(72) Inventor: QIN, Shouke, Beijing 100085 (CN); ZHANG, Zeming, Beijing 100085 (CN); HAN, You, Beijing 100085 (CN); CHEN, Zhiyang, Beijing 100085 (CN); CHENG, Xiaohua, Beijing 100085 (CN); XU, Peizhi, Beijing 100085 (CN); MA, Xiaolin, Beijing 100085 (CN); WEN, Shilei, Beijing 100085 (CN); CHEN, Shijia, Beijing 100085 (CN); LI, Xubin, Beijing 100085 (CN); JIANG, Yan, Beijing 100085 (CN)
(74) Representative: Romano, Giuseppe
(86) International application number: PCT/CN2015/083394
(87) International publication number: WO 2016/107125

(57) **Abstract**

An information searching method and apparatus, the information searching method comprising: acquiring a current keyword (S101); acquiring material information relating to the current keyword, the material information comprising picture fragments, text fragments and/or image entities (S102); synthesising the material information into a picture, and displaying same as a picture on a search results page (S103). The present information searching method and apparatus, by means of acquiring material information relating to a current keyword, increase the correlation of the acquired material information and the current keyword, and by means of synthesising the acquired material information, improve the quality and information content of the picture, thereby greatly increasing the speed a user browses information, and facilitating the user acquiring the required information from a lot of information as quickly as possible.

## Description

### CROSS-REFERENCE TO RELATED APPLICATION

This application claims priority to and benefits of Chinese Patent Application Serial No. 201410843273.2, entitled "Method and device for searching information", filed with the State Intellectual Property Office of P. R. China on December 30, 2014, the entire content of which is incorporated herein by reference.

### FIELD

The present disclosure relates to an information technology field, and more particularly to a method and a device for searching information.

### BACKGROUND

Search Engine is defined as a system for collecting information from the Internet based on a certain strategy, using specific computer programs. After organizing and processing the information, the search engine provides retrieval service for users and shows them retrieved information.

In the field of search engine, when a user queries information, search engine may show one or more search results, including advertising information and natural results. At present, the users can get information from images faster than from text since images contain more abundant information. Thus, more images are expected to be shown in search results.

However, after being obtained by the search engine, most of the images are returned to the clients directly or returned to the clients after a simple clipping or scaling process for displaying, as a result, both the quality and quantity of the images are insufficient. In addition, with the increasing user demand for images, the quality and information richness of the images become more and more important. The more abundant information the images contain, the faster the users obtain information from images. Therefore, the quality and quantity of information of images are to be improved.

### SUMMARY

Embodiments of the present disclosure seek to solve at least one of the problems existing in the related art to at least some extent. Accordingly, a first objective of the present disclosure is to provide a method for searching information. The method for searching information may provide users with images in accordance with their personal searching requirements, thus improving users' search experience and satisfaction.

A second objective of the present disclosure is to provide a device for searching information.

A third objective of the present disclosure is to provide a storage medium.

A fourth objective of the present disclosure is to provide a search engine.

In order to achieve the above objectives, embodiments of a first aspect of the present disclosure provide a method for searching information. The method includes: obtaining a current keyword; obtaining material information associated with the current keyword, in which the material information includes an image segment and a text segment and/or an image entity; and compositing the material information into an image to be shown in a search result page.

With the method for searching information according to embodiments of the present disclosure, the current keyword and the material information associated with the current keyword are obtained, in which the material information includes the image segment, the text segment and/or the image entity, and then the material information is composited into an image to be shown in the search result page. It can be seen that, in embodiments of the present disclosure, by obtaining the material information associated with the current keyword, the correlation of the obtained material information and the current keyword is high, and the quality and quantity of information of the image may be improved by compositing the obtained material information. Therefore, the speed at which the user browses information may be increased greatly and thus it is convenient for the user to acquire the desired information from a large volume of information as soon as possible.

In order to achieve the above objectives, embodiments of a second aspect of the present disclosure provide a device for searching information. The device includes: a first obtaining module configured to obtain a current keyword; a second obtaining module configured to obtain material information associated with the current keyword, in which the material information includes an image segment and a text segment and/or an image entity; and a composite module configured to composite the material information into an image to be shown in a search result page.

With the device for searching information according to embodiments of the present disclosure, the current keyword is obtained by the first obtaining module, and the material information associated with the above current keyword is obtained by the second obtaining module, in which the material information includes the image segment, the text segment and/or the image entity, and then the material information is composited by the composite module into the image to be shown in the search result page. It can be seen that, in embodiments of the present disclosure, by obtaining the material information associated with the current keyword, the correlation of the obtained material information and the current keyword is high, and the quality and quantity of information of the image may be improved by compositing the obtained material information. As a result, the speed at which the user browses information may be increased greatly and thus it is convenient for the user to acquire the desired information from a large volume of information as soon as possible.

In order to achieve the above objectives, embodiments of a third aspect of the present disclosure provide a storage medium for storing an application program which is configured to execute the method for searching information according to the embodiments of the first aspect of the present disclosure.

In order to achieve the above objectives, embodiments of a fourth aspect of the present disclosure provide a search engine. The search engine includes: one or more processors; memory; one or more modules stored in the memory, when executed by the one or more processors, performing following operations: obtaining a current keyword; obtaining material information associated with the current keyword, in which the material information includes an image segment and a text segment and/or an image entity; and compositing the material information into an image to be shown in the search result page.

Additional aspects and advantages of embodiments of present disclosure will be given in part in the following descriptions, become apparent in part from the following descriptions, or be learned from the practice of the embodiments of the present disclosure.

### BRIEF DESCRIPTION OF THE DRAWINGS

Fig. 1 is a flow chart of a method for searching information according to an embodiment of the present disclosure;
Fig. 2 is a flow chart of a method for searching information according to another embodiment of the present disclosure.
Fig. 3 is a first schematic diagram showing an image composition according to an embodiment of the present disclosure;
Fig. 4 is a second schematic diagram showing an image composition according to an embodiment of the present disclosure;
Fig. 5 is a third schematic diagram showing an image composition according to an embodiment of the present disclosure;
Fig. 6 is a fourth schematic diagram showing an image composition according to an embodiment of the present disclosure;
Fig. 7 is a fifth schematic diagram showing an image composition according to an embodiment of the present disclosure;
Fig. 8 is the flow chart showing a process of establishing and saving a correspondence between a keyword and a set of related images according to an embodiment of the present disclosure;
Fig. 9 is a block diagram of a device for searching information according to an embodiment of the present disclosure.
Fig. 10 is a block diagram of a device for searching information according to another embodiment of the present disclosure.

### DETAILED DESCRIPTION

Reference will be made in detail to embodiments of the present disclosure, where the same or similar elements and the elements having same or similar functions are denoted by like reference numerals throughout the descriptions. The embodiments described herein with reference to drawings are explanatory, illustrative, and used to generally understand the present disclosure. The embodiments shall not be construed to limit the present disclosure.

The method and device for searching information according to embodiments of the present disclosure will be described with reference to drawings.

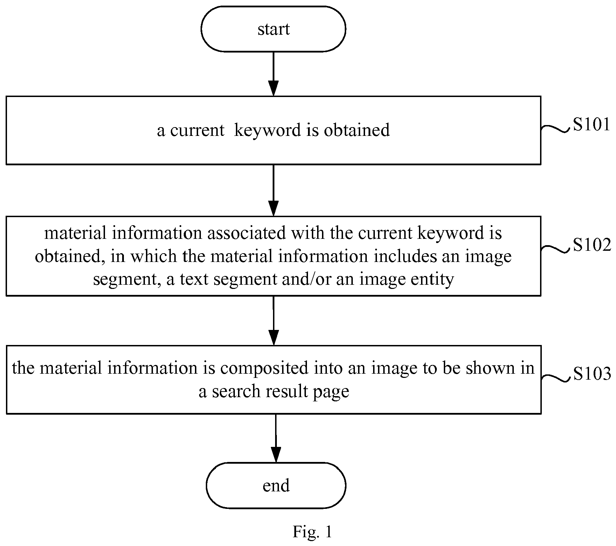

Fig. 1 is a flow chart of a method for searching information according to an embodiment of the present disclosure. The method is described on the side of Search Engine.

As shown in Fig. 1, the method for providing information includes the following acts.

In block S101, a current keyword is obtained.

In this embodiment, a user may input query information in a search box. After obtaining the query information, a client obtains the current keyword from the query information, and then sends the current keyword to a search engine. Thus, the search engine may obtain the current keyword.

The client can also get the current keyword in other ways. For example, when the user browses a webpage, the client can extract the current keyword based on the content of webpage browsed by the user and send the current keyword to the search engine, and so on. The methods of obtaining the current keyword are not limited in embodiments of the present disclosure.

In block S102, material information associated with the current keyword is obtained, in which the material information includes an image segment, a text segment and/or an image entity.

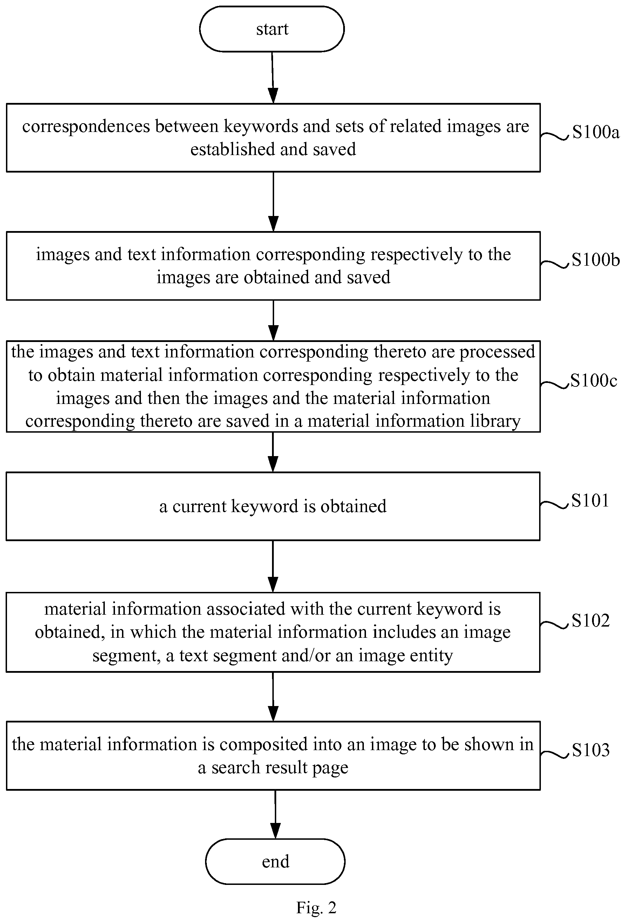

In this embodiment, before act S102, the method may further include act S100a in which correspondences between keywords and sets of related images are established and saved, as shown in Fig. 2.

In addition, before act S102, the method may further include acts S100b and S100c, as shown in Fig. 2. In block S100b, images and text information corresponding respectively the images are obtained and saved. In block S100c, the images and text information corresponding thereto are processed to obtain material information corresponding respectively the images and then the images and the material information corresponding thereto are saved in a material information library.

Specifically, the images and text information from respective Uniform Resource Locator (URL) on the internet may be captured and saved. These images and text information may be processed to obtain separate image segments and text segments and image entities through image processing techniques, word processing techniques or the like. Thus, the material information library may be built.

It should be noted that, it is unnecessary to execute act S100a and acts S100b-S100c in a strict order. Besides, acts S100a and S100b - S100c may also be executed between S101 and S102.

Specifically, obtaining the material information associated with the current keyword may include: obtaining an image associated with the current keyword according to the current keyword and a pre-stored correspondence between the current keyword and a set of related images and obtaining the material information associated with the current keyword from a pre-established material information library according to the image associated with the current keyword.

In block S103, the material information is composited into an image to be shown in a search result page.

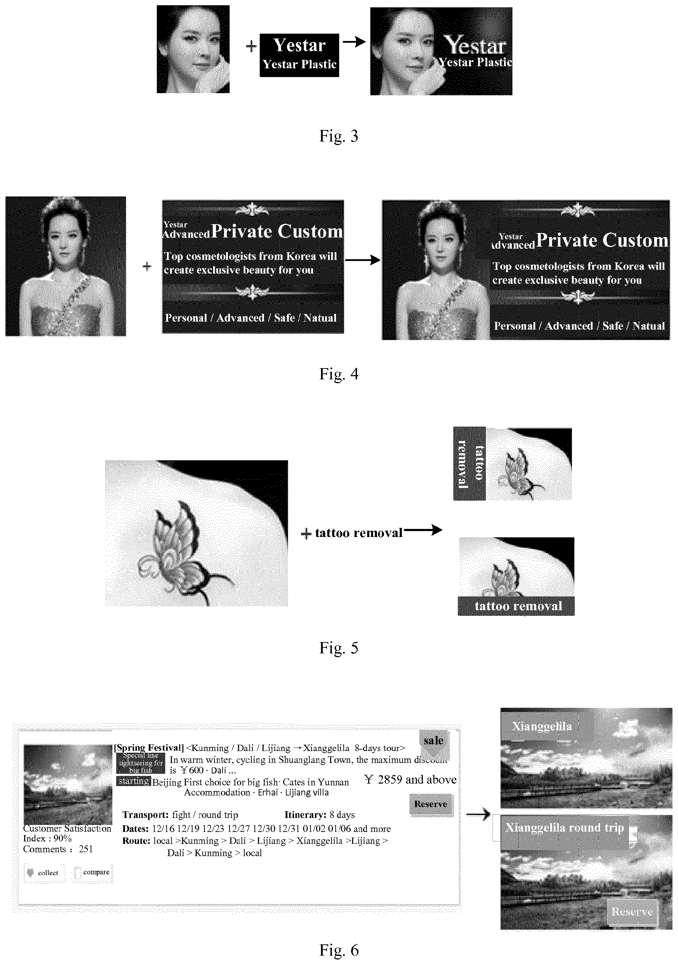

In this embodiment, the material information may be composited into an image by using an image composition technology. For example, the obtained image and text, an image and another image, text and text may be composited into an image. Specifically, examples of image composition are shown in Fig. 3-Fig. 7.

Since the composited image contains more information, the quality and quantity of information of the composited image are improved significantly, such that the speed at which the user browses information may be increased greatly and thus it is convenient for the user to acquire the desired information from a large volume of information as soon as possible.

With the method for searching information according to embodiments of the present disclosure, the current keyword and the material information associated with the current keyword are obtained, in which the material information includes the image segment, the text segment and/or the image entity, and then the material information may be composited into an image to be shown in the search result page. It can be seen that, in embodiments of the present disclosure, by obtaining the material information associated with the current keyword, the correlation of the obtained material information and the current keyword is high. The quality and quantity of information of the image may be improved by compositing the obtained material information. In this way, the speed at which the user browses information may be increased greatly and thus it is convenient for the user to acquire the desired information from a large volume of information as soon as possible.

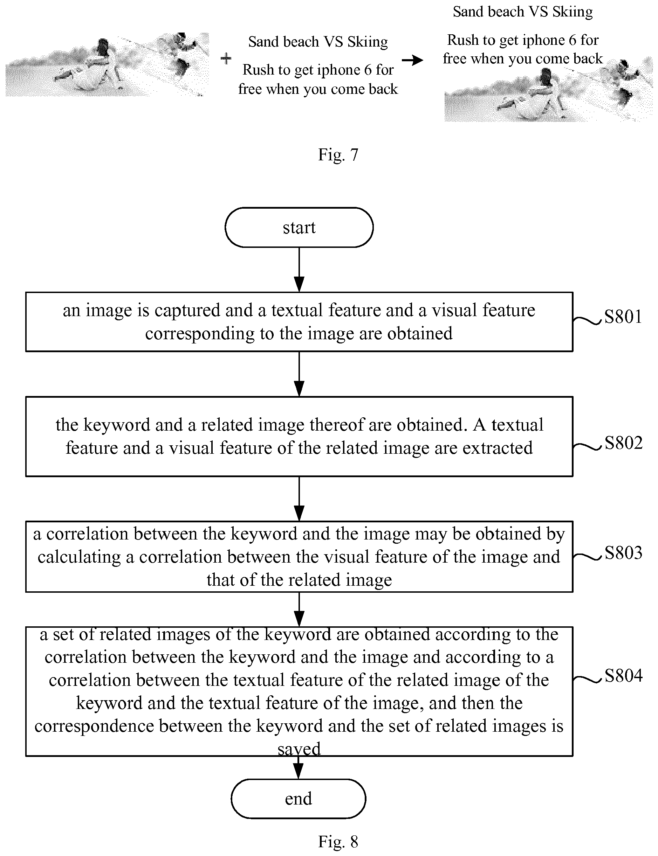

Fig. 8 is a flow chart showing a process of establishing and saving a correspondence between a keyword and a set of related images according to an embodiment of the present disclosure. In this embodiment, the correspondence between a keyword and a set of related images is established based on a large number of obtained samples.

As shown in Fig. 8, this process includes followings.

In block S801, an image is captured and a textual feature and a visual feature corresponding to the image are obtained.

Specifically, images from different Uniform Resource Locators (URL) may be captured, and then one or more of the title, the image description, the sub-links and the context information of the respective image may be obtained. At the same time, the obtained information may be treated as a part of textual features corresponding to the image.

Additionally, the text information and the entity information in the respective image may be recognized by using Optical Character Recognition (OCR) techniques, and the recognized information may be treated as a part of textual features corresponding to the image.

It can be seen that, the textual feature of an image includes one or more of a title, image description, a sub-link, context information of the image and text and entity information included in the image.

Specifically, each captured image may be converted to a first vector of which the dimension is N. This means that the first vector may describe a corresponding image and may be treated as a part of visual features of the corresponding image.

In block S802, the keyword and a related image thereof are obtained. A textual feature and a visual feature of the related image are extracted.

The method of extracting the textual feature is the same as that in S801. The extracted contents include one or more of a title, image description, a sub-link, context information of a corresponding image and text and entity information included in the corresponding image.

Besides, the process of extracting the visual feature may be described as follow. The related image of the keyword may be converted to a second vector, i.e. the second vector may describe the related image of the keyword. The first vector and the second vector may have a same dimension, such as N.

In block S803, a correlation between the keyword and the image may be obtained by calculating a correlation between the visual feature of the image and that of the related image.

In this embodiment, the correlation between the keyword and the image may be obtained by calculating the correlation between the visual feature of the image and that of the related image, which means that the correlation between the keyword and the image is obtained by calculating the correlation between the first vector and the second vector.

In block S804, a set of related images of the keyword are obtained according to the correlation between the keyword and the image and according to a correlation between the textual feature of the related image of the keyword and the textual feature of the image, and then the correspondence between the keyword and the set of related images is saved.

It should be noted that, the correlation between the keyword and the image is just one of the indexes for establishing the correspondence between the keyword and the set of related images, which means that the set of related images may be obtained based on the correlation between textual features of different images besides the correlation between the keyword and the image. Thus, more images associated with the keyword may be saved and these images may cover a more comprehensive scope and the correlation between each of these images and the keyword is high, which can help search engine provides better search results for users.

Thus, by the above acts S801-S804, the process of establishing and saving the correspondence between a keyword and a set of related images may be implemented.

In order to implement the above embodiments, embodiments of the present disclosure provide a device for searching information.

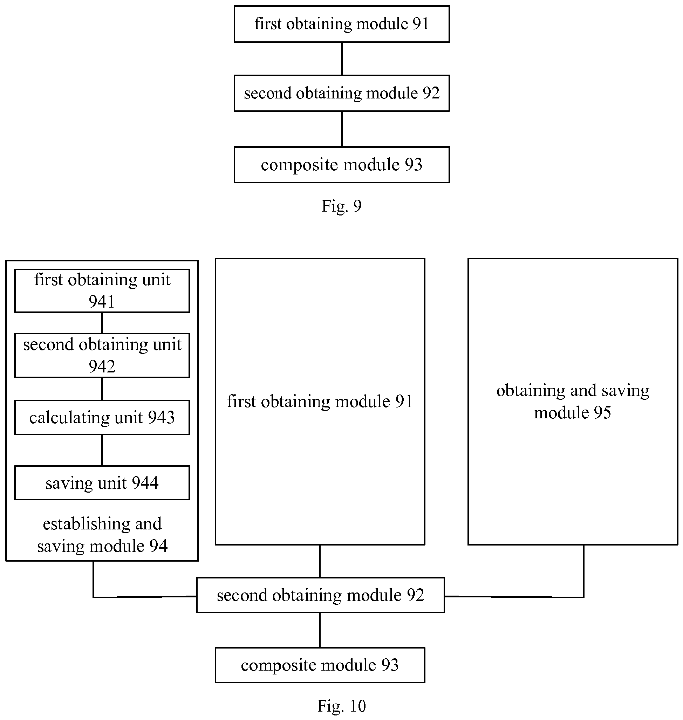

Fig. 9 is a block diagram of a device for searching information according to an embodiment of the present disclosure.

As shown in Fig. 9, the device for searching information includes a first obtaining module 91, a second obtaining module 92 and a composite module 93.

Specifically, the first obtaining module 91 is configured to obtain a current keyword; the second obtaining module 92 is configured to obtain material information associated with the current keyword, in which the material information includes an image segment and a text segment and/or an image entity; and the composite module 93 is configured to composite the material information into an image to be shown in a search result page.

In this embodiment, a user may input query information in a search box. After the client gets the query information and obtains the current keyword from the query information, the current keyword is sent to the first obtaining module 91. Thus, the first obtaining module 91 may obtain the current keyword.

The client can also get the current keyword in other ways. For example, when the user browses a webpage, the client can extract the current keyword based on the content of webpage browsed by the user and send the current keyword to the first obtaining module 91. The methods of obtaining the current keyword are not limited in embodiments of the present disclosure.

In addition, as shown in Fig. 10, the device for searching information may also include an establishing and saving module 94 which is configured to establish and save correspondences between keywords and sets of related images before the second obtaining module 92 obtains the image associated with the current keyword according to the current keyword and the correspondences between the keywords and the sets of related images.

Specifically, the establishing and saving module 94 may include a first obtaining unit 941, a second obtaining unit 942, a calculating unit 943 and a saving unit 944.

The first obtaining unit 941 is configured to capture a first image and obtain a textual feature and a visual feature corresponding to the first image; the second obtaining unit 942 is configured to obtain a keyword and a related image thereof, and to obtain a textual feature and a visual feature of the related image; the calculating unit 943 is configured to obtain a correlation between the keyword and the first image by calculating a correlation between the visual feature of the first image and the visual feature of the related image; the saving unit 944 is configured to obtain a set of related images according to the correlation between the keyword and the first image calculated by the calculating unit 943 and according to a correlation between the textual feature of the related image of the keyword and the textual feature of the first image, and to save the correspondence between the keyword and the set of related images.

Specifically, images in different Uniform Resource Locators (URL) can be captured by the first obtaining unit 941 which can obtain one or more of a title, image description, a sub-link, context information of a respective image and text and entity information included in the respective image. Besides, the obtained information may be treated as a part of corresponding textual features.

Additionally, the text information and the entity information in the respective image may be recognized by the first obtaining unit 941 using Optical Character Recognition (OCR) technique, and the recognized information may be treated as a part of corresponding textual features.

It can be seen that, the textual feature of an image includes one or more of a title, image description, a sub-link, context information of the image and text and entity information included in the image.

Specifically, the first obtaining unit 941 may convert each captured image to a first vector, of which the dimension is N. This means that the first vector can describe a corresponding image and can be treated as a part of visual features of the corresponding image.

Similarly, the second obtaining unit 942 may obtain the text feature of the related image of the keyword in a same way as the first obtaining unit 94. The extracted contents include one or more of a title, image description, a sub-link, context information of a corresponding image and text and entity information included in the corresponding image.

Besides, the second obtaining unit 942 can convert the related image to a second vector. The first vector and the second vector may have a same dimension, such as N.

Specifically, the calculating unit 943 can obtain the correlation between the keyword and the first image by calculating the correlation between the visual feature of the first image and that of the related image, which means that the correlation between the keyword and first image can be obtained by calculating the correlation between the first vector and the second vector.

It should be noted that the correlation between the keyword and the first image is just one of the indexes for establishing the correspondence between the keyword and the set of related images, which means that the set of related images may be obtained based on the correlation between textual features of different images besides the correlation between the keyword and the first image. Thus, more images associated with the keyword can be saved and these images may cover a more comprehensive scope and the correlation between each of these images and the keyword is high, which can help search engine provides better search results for users.

Furthermore, as shown in Fig. 10, the device for searching information may also include an obtaining and saving module 95 which is configured to obtain and save images and text information corresponding respectively to the images, and to process the images and the text information corresponding thereto to obtain material information corresponding respectively to the images and to save the images and the material information corresponding thereto in the material information library, before the second obtaining module 92 obtains the material information associated with the current keyword from the pre-established material information library according to the image associated with the current keyword.

Specifically, the obtaining and saving module 95 can capture and save the images and text information from each Uniform Resource Locator (URL) on the internet. These images and text information may be processed to obtain separate image segments and text segments and image entities through image processing techniques and text processing techniques. Thus, the material information library can be built.

Based on the device for searching information shown in Fig. 9 and Fig. 10, the second obtaining module 92 may obtain the image associated with the current keyword according to the correspondences between keywords and sets of related images established by the establishing and saving module 94, and then obtain the material information associated with the current keyword from the material information library saved by the obtaining and saving module 95 according to the image associated with the current keyword. After the second obtaining module 92 obtains the material information associated with the current keyword, the composite module 93 may composite the obtained material information into an image. For example, the obtained image and text, an image and another image, text and text may be composited into an image. Specifically, examples of image composition are shown in Fig. 3-Fig. 7.

Since the composited image contains more information, the quality and quantity of information of the composited image are improved significantly, such that the speed at which the user browses information may be increased greatly and thus it is convenient for the user to acquire the desired information from a large volume of information as soon as possible.

With the device for searching information according to embodiments of the present disclosure, the first obtaining module obtains the current keyword and the second obtaining module obtains the material information associated with the current keyword, in which the material information includes the image segment, the text segment and/or the image entity; the composite module composites the material information into an image to be shown in the search result page. It can be seen that, in embodiments of the present disclosure, by obtaining the material information associated with the current keyword, the correlation of the obtained material information and the current keyword is high. The quality and quantity of information of the image may be improved by compositing the obtained material information. In this way, the speed at which the user browses information may be increased greatly and thus it is convenient for the user to acquire the desired information from a large volume of information as soon as possible.

In order to implement the above embodiments, the present disclosure further provides a storage medium for storing an application program which is configured to execute the method for searching information according to any of embodiments of the present disclosure.

In order to implement the above embodiments, the present disclosure further provides a search engine which includes one or more processors, memory, one or more modules. The one or more modules are stored in the memory, when executed by the processors, the following operations are performed.
S101', obtaining a current keyword.
S102', obtaining material information associated with the current keyword, in which the material information includes an image segment and a text segment and/or an image entity.
S103', compositing the material information into an image to be shown in a search result page.

Reference throughout this specification to "one embodiment", "some embodiments," "an embodiment" , "a specific example," or "some examples," means that a particular feature, structure, material, or characteristic described in connection with the embodiment or example is included in at least one embodiment or example of the present disclosure. Thus, the appearances of the phrases in various places throughout this specification are not necessarily referring to the same embodiment or example of the present disclosure. Furthermore, the particular features, structures, materials, or characteristics may be combined in any suitable manner in one or more embodiments or examples. In addition, in a case without contradictions, different embodiments or examples or features of different embodiments or examples may be combined by those skilled in the art.

Those skilled in the art shall understand that terms such as "first" and "second" are used herein for purposes of description and are not intended to indicate or imply relative importance or significance. Thus, the feature defined with "first" and "second" may comprise one or more this feature. In the description of the present disclosure, "a plurality of" means two or more than two, unless specified otherwise.

It will be understood that, the flow chart or any process or method described herein in other manners may represent a module, segment, or portion of code that comprises one or more executable instructions to implement the specified logic function(s) or that comprises one or more executable instructions of the steps of the progress. And the scope of a preferred embodiment of the present disclosure includes other implementations in which the order of execution may differ from that which is depicted in the flow chart, which should be understood by those skilled in the art.

The logic and/or step described in other manners herein or shown in the flow chart, for example, a particular sequence table of executable instructions for realizing the logical function, may be specifically achieved in any computer readable medium to be used by the instruction execution system, device or equipment (such as the system based on computers, the system comprising processors or other systems capable of obtaining the instruction from the instruction execution system, device and equipment and executing the instruction), or to be used in combination with the instruction execution system, device and equipment. As to the specification, "the computer readable medium" may be any device adaptive for including, storing, communicating, propagating or transferring programs to be used by or in combination with the instruction execution system, device or equipment. More specific examples of the computer readable medium comprise but are not limited to: an electronic connection (an electronic device) with one or more wires, a portable computer enclosure (a magnetic device), a random access memory (RAM), a read only memory (ROM), an erasable programmable read-only memory (EPROM or a flash memory), an optical fiber device and a portable compact disk read-only memory (CDROM). In addition, the computer readable medium may even be a paper or other appropriate medium capable of printing programs thereon, this is because, for example, the paper or other appropriate medium may be optically scanned and then edited, decrypted or processed with other appropriate methods when necessary to obtain the programs in an electric manner, and then the programs may be stored in the computer memories.

It should be understood that the various parts of the present disclosure may be realized by hardware, software, firmware or combinations thereof. In the above embodiments, a plurality of steps or methods may be stored in a memory and achieved by software or firmware executed by a suitable instruction executing system. For example, if it is realized by the hardware, likewise in another embodiment, the steps or methods may be realized by one or a combination of the following techniques known in the art: a discrete logic circuit having a logic gate circuit for realizing a logic function of a data signal, an application-specific integrated circuit having an appropriate combination logic gate circuit, a programmable gate array (PGA), a field programmable gate array (FPGA), etc.

Those skilled in the art shall understand that all or parts of the steps in the above exemplifying method of the present disclosure may be achieved by commanding the related hardware with programs. The programs may be stored in a computer readable memory medium, and the programs comprise one or a combination of the steps in the method embodiments of the present disclosure when run on a computer.

In addition, each function cell of the embodiments of the present disclosure may be integrated in a processing module, or these cells may be separate physical existence, or two or more cells are integrated in a processing module. The integrated module may be realized in a form of hardware or in a form of software function modules. When the integrated module is realized in a form of software function module and is sold or used as a standalone product, the integrated module may be stored in a computer readable memory medium.

The above-mentioned memory medium may be a read-only memory, a magnetic disc, an optical disc, etc. Although explanatory embodiments have been shown and described, it would be appreciated that the above embodiments are explanatory and cannot be construed to limit the present disclosure, and changes, alternatives, and modifications can be made in the embodiments without departing from scope of the present disclosure by those skilled in the art.

## Claims

1. A method for searching information, comprising:
obtaining a current keyword;
obtaining material information associated with the current keyword, wherein the material information comprises an image segment and a text segment and/or an image entity; and
compositing the material information into an image to be shown in a search result page.

2. The method according to claim 1, wherein obtaining material information associated with the current keyword comprises:
obtaining an image associated with the current keyword according to the current keyword and pre-stored correspondences between keywords and sets of related images, and obtaining the material information associated with the current keyword from a pre-established material information library according to the image associated with the current keyword.

3. The method according to claim 2, before obtaining an image associated with the current keyword according to the current keyword and pre-stored correspondences between keywords and sets of related images, further comprising:
establishing and saving the correspondences between the keywords and the sets of related images.

4. The method according to claim 3, wherein establishing and saving the correspondences between the keywords and the sets of related images comprises:
capturing a first image and obtaining a textual feature and a visual feature corresponding to the first image;
obtaining a keyword, a related image of the keyword and obtaining a textual feature and a visual feature of the related image;
obtaining a correlation between the keyword and the first image by calculating a correlation between the visual feature corresponding to the first image and the visual feature of the related image; and
obtaining a set of related images according to the correlation between the keyword and the first image and according to a correlation between the textual feature of the related image of the keyword and the textual feature of the first image, and saving the correspondence between the keyword and the set of related images.

5. The method according to claim 4, wherein
obtaining the visual feature corresponding to the first image comprises: converting the first image to a first vector;
extracting a visual feature of the related image comprises: converting the visual feature of the related image to a second vector, in which the first vector and the second vector have a same dimension.

6. The method according to claim 5, wherein obtaining a correlation between the keyword and the first image by calculating a correlation between the visual feature corresponding to the first image and the visual feature of the related image comprises:
obtaining the correlation between the keyword and the first image by calculating a correlation between the first vector and the second vector.

7. The method according to any of claims 4-6, wherein the textual feature of an image comprises one or more of a title, image description, a sub-link, context information of the image and text and entity information contained in the image.

8. The method according to claim 2, before obtaining the material information associated with the current keyword from a pre-established material information library according to the image associated with the current keyword, further comprising:
obtaining and saving images and text information corresponding respectively to the images; and
processing the images and the text information corresponding thereto to obtain material information corresponding respectively to the images and saving the images and the material information corresponding thereto in the material information library.

9. A device for searching information, comprising:
a first obtaining module, configured to obtain a current keyword;
a second obtaining module, configured to obtain material information associated with the current keyword, wherein the material information comprises an image segment and a text segment and/or an image entity; and
a composite module, configured to composite the material information into an image to be shown in a search result page.

10. The device according to claim 9, wherein the second obtaining module is further configured to:
obtain an image associated with the current keyword according to the current keyword and pre-stored correspondences between keywords and sets of related images, and obtain the material information associated with the current keyword from a pre-established material information library according to the image associated with the current keyword.

11. The device according to claim 10, further comprising:
an establishing and saving module, configured to establish and save the correspondences between the keywords and the sets of related images before the second obtaining module obtains the image associated with the current keyword according to the current keyword and the correspondences between the keywords and the sets of related images.

12. The device according to claim 11, wherein the establishing and saving module comprises:
a first obtaining unit, configured to capture a first image and to obtain a textual feature and a visual feature corresponding to the first image;
a second obtaining unit, configured to obtain a keyword and a related image of the keyword, and to obtain a textual feature and a visual feature of the related image;
a calculating unit, configured to obtain a correlation between the keyword and the first image by calculating a correlation between the visual feature corresponding to the first image and the visual feature of the related image; and
a saving unit, configured to obtain a set of related images according to the correlation between the keyword and the first image and according to a correlation between the textual feature of the related image of the keyword and the textual feature of the first image, and to save the correspondence between the keyword and the set of related images.

13. The device according to claim 12, wherein the first obtaining unit is further configured to: convert the first image to a first vector;
the second obtaining unit is further configured to: convert the related image to a second vector, in which the first vector and the second vector have a same dimension.

14. The device according to claim 13, wherein the calculating unit is further configured to:
obtain the correlation between the keyword and the first image by calculating a correlation between the first vector and the second vector.

15. The device according to any of claims 12-14, wherein the textual feature of an image comprises one or more of a title, image description, a sub-link, context information of the image and text and entity information contained in the image.

16. The device according to claim 10, further comprising:
an obtaining and saving module, configured to obtain and save images and text information corresponding respectively to the images and to process the images and the text information corresponding thereto to obtain material information corresponding respectively to the images and save the images and the material information corresponding thereto in the material information library, before the second obtaining module obtains the material information associated with the current keyword from the pre-established material information library according to the image associated with the current keyword.

17. A storage medium for storing an application program which is configured to execute the method for searching information according to any one of claims 1 to 8.

18. A search engine, comprising:
one or more processors;
memory;
one or more modules, stored in the memory, when executed by the one or more processors, performing following operations:
obtaining a current keyword;
obtaining material information associated with the current keyword, wherein the material information comprises an image segment and a text segment and/or an image entity; and
compositing the material information into an image to be shown in a search result page.
